# EUROPEAN PATENT SPECIFICATION

(11) **EP 4 159 530 B1**
(45) Date of publication and mention of the grant of the patent: **10.12.2025**
(21) Application number: 22198838.9
(22) Date of filing: 29.09.2022
(51) Int. Cl.: B60L 53/16, B60L 50/60

(54) **CHARGING FACILITY ON ELECTRICALLY DRIVEN ROAD VEHICLE**
LADEEINRICHTUNG AN EINEM ELEKTRISCH ANGETRIEBENEN STRASSENFAHRZEUG
VÉHICULE ROUTIER

(30) Priority: 30.09.2021 NL 2029281
(43) Date of publication of application: 05.04.2023
(73) Proprietor: DAF Trucks N.V., 5643 TW Eindhoven (NL)
(72) Inventor: WOUTERS, Raymond Martinus Cornelis Maria, 5643 TW Eindhoven (NL); KESSELS, Johannes Theodorus Bernard Anna, 5643 TW Eindhoven (NL)
(74) Representative: V.O.

(56) References cited:
- DE-A1- 102011 118 957
- DE-A1- 102015 112 349
- US-A1- 2019 106 007

## Description

The invention relates to a road vehicle provided with an electric motor configured to at least partially propel the vehicle and a vehicle battery configured to at least partially power the electric motor.

### BACKGROUND

To charge a vehicle battery of a road vehicle it is known to provide the road vehicle with a charging socket configured to receive a charging plug of a charging station. The charging socket comprises a charging socket holder which can be electrically coupled to the vehicle battery, so that the vehicle battery can be charged via the charging plug of the charging station. When the vehicle battery needs to be charged, the road vehicle may be driven to a charging station, and the charging plug may be coupled to the charging socket of the road vehicle. A charging cable connecting the charging plug to the charging station typically has a length between 3 to 7 meters. Although longer charging cables can be used, these are preferably avoided since they inherently provide larger electrical losses during charging.

In order to charge the vehicle battery at a charging station, the road vehicle is parked at the charging station such that the charging socket of the road vehicle is positioned near the location of the charging plug. However, depending on the position of the charging socket and the charging plug a driver of the road vehicle must make a lot of effort to have the charging socket and the charging station within the range determined by the charging cable. The road vehicle may need to be parked such that the charging cable can be guided around the road vehicle, or the road vehicle may be parked backwards so that the charging socket is on the same side as the charging station. There might be situations where this is problematic, for examples near charging stations with little room to maneuver, and especially for larger road vehicles, such as trucks potentially towing a trailer.

### SUMMARY

It is therefore an object of the invention to provide a road vehicle with improved flexibility to connect to a charging station. To that end, the invention provides a road vehicle provided with an electric motor configured to at least partially propel the vehicle and a vehicle battery configured to at least partially power the electric motor, wherein the road vehicle comprises a charging socket configured to receive a charging plug of a charging station, and to cooperate with the charging station to charge the vehicle battery, wherein the charging socket comprises a charging socket holder which can be electrically coupled to the vehicle battery, characterised in that the road vehicle is provided with at least one further charging socket, wherein the at least one further charging socket comprises a further charging socket holder which can be electrically coupled to the vehicle battery. Since the road vehicle according to the invention comprises the charging socket and the at least one further charging socket, the socket which is nearest to the charging station may be selected to receive the charging plug and couple to the charging station. By carefully placing the charging socket and the at least one further charging socket, the flexibility to connect to the charging station may be greatly increased. For instance, the charging socket and the at least one further charging socket may be placed on opposite sides of the road vehicle. In this manner a charging plug may be connected to either one of these opposite sides. In addition the second-hand value of the road vehicle will also increase, as it is independent on the existing charging infrastructures of the new customer.

The at least one further charging socket may be structurally the same as the charging socket and the road vehicle may comprise a plurality of substantially the same charging sockets, for example 2, 3, or 4 charging sockets.

US2019106007A1 relates to a vehicle with multiple charging interfaces.

According to the invention the road vehicle further comprises a plug-in socket, the plug-in socket being configured to be selectively connected to and be electrically coupled with any one of the charging socket holder and the at least one further charging socket holder and to receive the charging plug of the charging station. By having a plug-in socket which can be connected to different charging socket holders, one single plug-in socket is sufficient. The plug-in socket can be connected to the charging socket holder for which it is the most convenient to connect to the charging station, for example the charging socket holder of the charging socket or further charging socket which is nearest to the charging station.

Because the charging socket holder needs the plug-in socket to be connected in order to connect to the charging station, having the single shared plug-in socket means it is only possible to connect one charging socket to a charging station at the same time. It is not possible to accidentally, or intentionally connect both the charging socket and the further charging socket to the charging station or a plurality of charging stations, which may result in short-circuiting these charging sockets or the vehicle battery or other parts of the road vehicle or charging stations.

The road vehicle may further comprise a safety system which detects whether in addition to the connected plug-in socket, an additional plug-in socket is connected to any one of the charging socket holder and the at least one further charging socket holder. In this manner, the safety system may e.g. electrically decouple the charging socket holder and the further charging socket holder from the vehicle battery in case an additional plug-in socket is connected to a further charging socket while another plug-in socket is connected to another charging socket. Thus it can be prevented that two plug-in sockets are electrically coupled to the vehicle battery simultaneously.

The charging socket holder and the at least one further charging socket holder may be configured to be electrically decoupled from the vehicle battery when the plug-in socket is detached from the respective socket holder. This ensures that the charging socket holder or the further charging socket holder is only electrically coupled to the vehicle battery when the plug-in socket is connected to the respective socket holder. Preferably, the charging socket holder and the further charging socket holder are designed as a Manual Service Disconnect (MSD). An MSD interrupts the current coming out of the vehicle battery when the plug-in socket is disconnected from the charging socket holder, making it safe to touch the socket holder.

The charging socket holder and the at least one further charging socket holder preferably are finger proof, in particular having an IPxxxB rating, preventing touching of any conductive parts of the charging socket holder.

The road vehicle may further comprise at least one socket holder cover. The at least one socket holder cover may be configured to be connected to any one of the charging socket holder and the at least one further charging socket holder. The at least one socket holder cover may cover the charging socket holder or the at least one further charging socket holder to which it is connected. This may prevent electrical connections of these charging socket or further charging socket from exposure, and thus preventing accidental touching of said connections. Furthermore the at least one socket holder cover may also protect from water ingress in the charging socket holder or the at least one further charging socket holder, in particular having an IP6k9k rating which protects against high pressure cleaning.

In an embodiment of a road vehicle according to the invention each of the charging socket holder and the at least one further charging socket holder is provided with a locking mechanism to lock a connected socket holder cover or plug-in socket. Un unlocking tool, such as a key or a special tool, may be used to unlock the locking mechanism. By requiring such an unlocking tool unauthorized people may be prevented from accessing the high voltage system or losing the plug-in socket or the at least one of the further socket holder cover.

In a further embodiment of a road vehicle according to the invention the safety system comprises a close detection system which detects whether the plug-in socket or a socket holder cover is correctly connected to the respective socket holder. The close detection system may e.g. be a high voltage interlock (HVIL), which uses a low voltage loop signal to detect whether all connections are correctly closed. Incorrect closure will result in the opening of the loop, which can be used to signal that the connection concerned is not correctly closed and take appropriate measures to avoid high voltage hazards.

In an embodiment of the road vehicle according to the invention, the charging socket is placed at a first side of the vehicle. At least one of the further charging sockets is placed at a second side of the vehicle, opposite the first side. In this manner a charging plug may be connected to either one of these opposite sides. In that way a charging station on either side of the vehicle can easily be connected to.

In an embodiment of the road vehicle, the at least one further charging socket comprises a second charging socket, a third charging socket and/or a fourth charging socket. The charging socket, the second charging socket, the third charging socket and the fourth charging socket, are placed apart at different positions around a circumference of the road vehicle.

The charging socket, the second charging socket, the third charging socket and the fourth charging socket, may be placed respectively at or near a back side, at or near a left side, at or near a front side, and at or near a right side, of the road vehicle. Having four charging sockets spaced around the road vehicle will ensure a great flexibility in correctly positioning the road vehicle at a charging station.

In an embodiment of the road vehicle, the road vehicle is embodied as a truck or a bus. Trucks and busses are typically large road vehicles, having less maneuverability than e.g. an automobile. The advantage of this invention is especially pronounce for trucks and busses.

The invention will be further explained with reference to the Figures, in which non-limiting exemplary embodiments of a road vehicle according to the invention are schematically shown.

### BRIEF DESCRIPTION OF THE FIGURES

Figure 1 shows a schematic drawing of an example of an embodiment of a road vehicle according to the invention;
Figure 2 shows a schematic drawing of another example of an embodiment of a road vehicle according to the invention; and
Figure 3 shows an alternative solution with improved flexibility to connect a road vehicle to a charging station.

### DETAILED DESCRIPTION

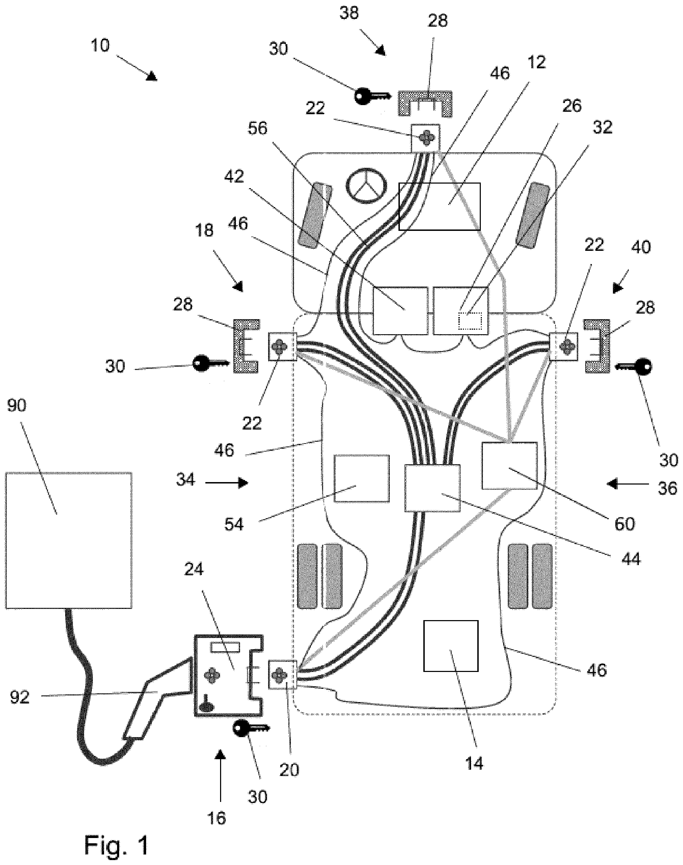

In figure 1 an example of an embodiment of the road vehicle 10 according to the invention is schematically shown. The road vehicle 10 is provided with an electric motor 12 configured to at least partially propel the vehicle 10 and a vehicle battery 14 configured to at least partially power the electric motor 12. The road vehicle 10 further comprises a charging socket 16 configured to receive a charging plug 92 of a DC (direct current) charging station 90, and to cooperate with the charging station 90 to charge the vehicle battery 14. Such a charging socket 16 may for example be a CCS Combo2 plug type. The road vehicle 10 is provided with at least one further charging socket 18, 38, 40.

In the embodiment of figure 1, the road vehicle 10 is embodied as a truck or heavy goods vehicle. The at least one further charging socket 18, 38, 40 comprises a second charging socket 18, a third charging socket 38 and a fourth charging socket 40. The charging socket 16, the second charging socket 18, the third charging socket 38 and the fourth charging socket 40, are placed apart at different positions around a circumference of the truck 10. As shown in figure 1, the charging socket 16, the second charging socket 18, the third charging socket 38 and the fourth charging socket 40, are placed respectively at or near a back side, at or near a left side, at or near a front side, and at or near a right side of the truck 10.

The vehicle battery 14 is controlled by a charger control unit 60, which controls the power used by the vehicle battery 14 when driving and which controls the power added to the vehicle battery 14 when charging. In figure 1, the charging socket 16 and further charging sockets 18, 38, 40 are configured to connect to the DC charging station 90. Via high power DC power cables 56, the charging sockets 16, 18, 38, 40 are directly connected to a high voltage junction box 44. The high voltage junction box 44 electrically connects the high power DC cables 56 from the charging sockets 16, 18, 38, 40, the vehicle battery 14, the electric motor 12, and, when applicable, an on board charger 54, with each other. In order not to make the drawing unnecessary complex the power cables electrically connecting the high voltage junction box 44, the vehicle battery 14, the electric motor, and, when applicable, the on board charger 54, are not drawn.

The electrical potential of the vehicle battery 14 is in the high voltage range. All parts electrically connected or connectable to the vehicle battery 14 together form the high voltage system. The truck 10 comprises a safety system 26, discussed below, to protect drivers or other operators of the truck 10 from this high voltage system.

As shown in figure 1, the charging socket 16 comprises a charging socket holder 20. The charging socket holder 20 can be electrically coupled to the vehicle battery 14. The at least one further charging socket 18, 38, 40 comprises a further charging socket holder 22 which can eb electrically coupled to the vehicle battery 14. The truck 10 further comprises a plug-in socket 24 configured to be selectively connected to and be electrically coupled with any one of the charging socket holder 20 and the at least one further charging socket holder 22 and to receive the charging plug 92 of the charging station 90. The charging socket holder 20 and the at least one further charging socket holder 22 are configured to be electrically decoupled from the vehicle battery 14 when the plug-in socket 24 is detached from the respective socket holder 20, 22.

The safety system 26 is amongst other things configured to detect whether in addition to the connected plug-in socket 24, an additional plug-in socket 24 is connected to any one of the charging socket holder 20 and the at least one further charging socket holder 22. The safety system 26 in particular is configured to electrically decouple the charging socket holder and the further charging socket holder from the vehicle battery in case an additional plug-in socket is connected to a further charging socket while another plug-in socket is connected to another charging socket. Thus the safety system 26 prevents that two plug-in sockets are electrically coupled to the vehicle battery simultaneously and provides an appropriate warning to the driver.

Further safety is provided by designing the charging socket holder 20 and the at least one further charging socket holder 22 as a Manual Service Disconnect (MSD), known per se, to interrupt the current coming out of the vehicle battery 14. By pulling the MSD, i.e. by removing the plug-in socket 24 from the socket holder 20, 22, the pins of the socket holder 20, 22 are disconnected from the vehicle battery 14 ensuring that it is safe to touch the socket holder 20, 22, when there is no plug-in socket 24 connected.

As another safety feature, the charging socket holder 20 and the at least one further charging socket holder 22 are finger proof. Such a finger proof design ensures that the electrical connection which connects the charging socket holder 20, 22 with the plug-in socket 24 cannot be manually touched, even when the plug-in socket 24 is detached from the charging socket holder 20, 22. Such a finger proof charging socket holder 20, 22 may for example have an IPxxxB rating.

The truck 10 as shown in figure 1, further comprises at least one socket holder cover 28. The at least one socket holder cover 28 is configured to be connected to any one of the charging socket holder 20 and the at least one further charging socket holder 22. As shown in figure 1, the further charging socket holders 22 of each of the second charging socket 18, the third charging socket 38, and the fourth charging socket 40, are provided with their own socket holder cover 28. This socket holder cover 28 covers the electrical connections from the respective further charging socket holder 22, thereby protecting the electrical connections from touching, and the charging socket holder 22 from water ingress, e.g. by rain. The charging socket holder cover 28 may for example have an IP6k9k rating.

As shown in figure 1, each of the charging socket holder 20 and the at least one further charging socket holder 22 is provided with a locking mechanism 30 to lock a connected socket holder cover 28 or plug-in socket 24. The locking mechanism 30 comprises a lock which can be unlocked by a matching key. Only by turning the matching key can the locking mechanism be unlocked and the socket holder cover 28 or plug-in socket 24 can be removed from the associated charging socket holder 20 or further charging socket holder 22.

As shown in figure 1, each of the charging socket holder 20 and the at least one further charging socket holder 22 are connected by communication cables 46. A close detection system 32 that is part of the safety system 26 is configured to detect whether the plug-in socket 24 or a socket holder cover 28 is correctly connected to the respective socket holder 20, 22 by detecting whether all connections formed by the communication cables 46 are correctly closed.

In the embodiment shown in figure 1 the close detection system 32 is embodied as a high voltage interlock (HVIL). HVIL uses a low voltage loop signal to detect whether all connections formed by the communication cables 46 are correctly closed.. In this manner incorrect closure of any of these connections will result in the opening of the loop, which can be used to signal that at least one of connections is not correctly closed. and take appropriate measures to avoid high voltage hazards.

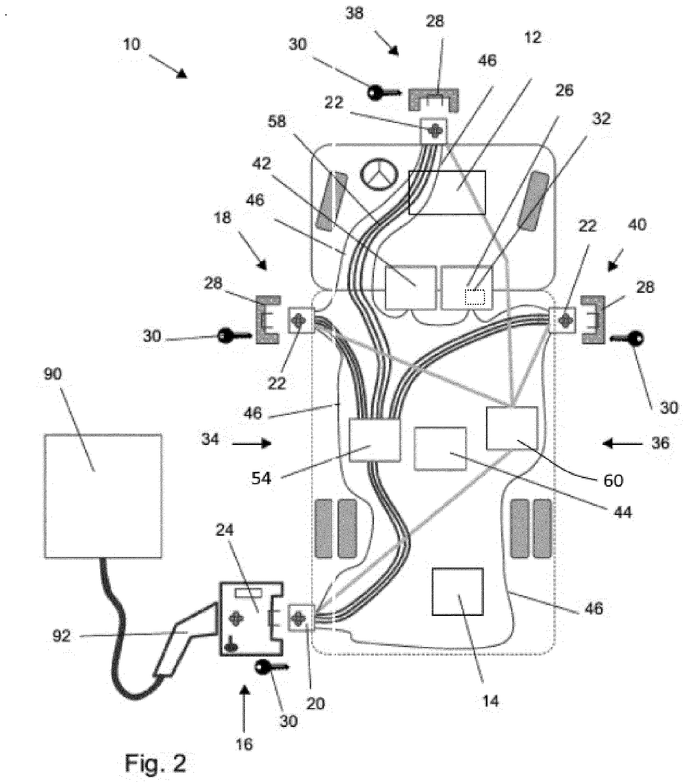

Figure 2 shows an embodiment which is similar to the embodiment shown in figure 1. The difference is that the charging socket 16 and further charging socket 18, 38, 40 are configured to connect to an alternating current (AC) charging station 90'. Via AC cables power 58, the charging sockets 16, 18, 38, 40 are connected to the on board charger 54. The on board charger 54 is a transformer which transforms the AC from the charging station to DC required to charge the vehicle battery 14. The on board charger 54 is electrically connected to the high voltage junction box 44. In order not to make the drawing unnecessary complex the DC power cables electrically connecting the on board charger 54 to the high voltage junction box 44, are not drawn. It is further observed that for AC charging three cables are required whereas for DC charging two cables are used.

It is possible to combine the embodiments of figures 1 and 2 and selectively connect the charging sockets 16, 18, 38, 40 to both the on board charger 54 or directly to the high voltage junction box 44 bypassing the on board charger 54. In particular the charging socket can be of the type CCS Combo2, the pinning of which is such that DC as well as AC charging is supported. Depending on the type of charging station 90, 90', the charger control unit 42 can then connect the charging sockets 16, 18, 38, 40 via the on board charger 54 in case of a AC charging station 90', or directly from the charging sockets 16, 18, 38, 40 to the high voltage junction box 44 in case of a DC charging station 90.

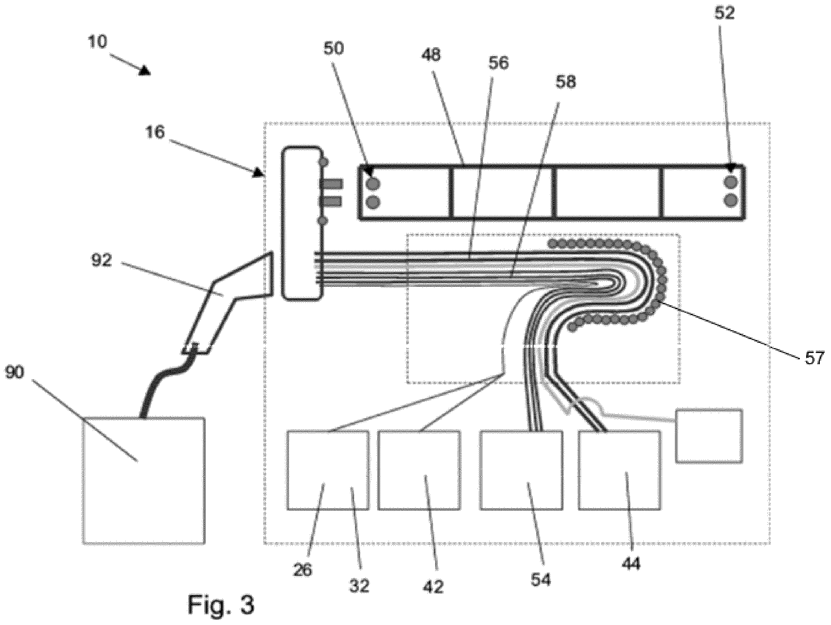

Figure 3 shows an alternative solution with improved flexibility to charge a vehicle battery at a charging station 90. Instead of comprising the further charging sockets 18, 38, 40, a single charging socket 16 is used which is mounted moveable on a rail assembly 48. The rail assembly 48 has two locking points 50, 52 at which position the charging socket 16 can be locked to the rail assembly 10. The first locking point is a left locking point 50 which is situated at the left side of the truck 10. The second locking point is a right locking point 52 which is situated a the right side of the truck 10. By virtue of the rail assembly 48, the charging socket 16 can be moved between the left locking point 50 at the left side of the truck 10 and the right locking point 52 at the right side of the truck 10. Connected to the charging socket 16 are DC power cables 56 and/or AC power cables 58, electrically connecting the charging socket 16 to respectively the high voltage junction box 44 and the on board charger 54. These power cables 56, 58 need to be flexible to allow the charging socket 16 to move between the locking points 50, 52. As movement of these power cables 56, 58 might induce extra stress, preferably a cable carrier or drag chain 57 is used. The cable carrier or drag chain 57 helps guiding the power cables 56, 58 in their movement, thereby reducing the extra stress and enhancing the durability. It is observed that in this alternative solution there is no need to have a detachable plug-in socket.

## Claims

1. A road vehicle (10) provided with an electric motor (12) configured to at least partially propel the vehicle (10) and a vehicle battery (14) configured to at least partially power the electric motor (12),
wherein the road vehicle (10) comprises:
- a charging socket (16) configured to receive a charging plug (92) of a charging station (90), and to cooperate with the charging station (90) to charge the vehicle battery (14), wherein the charging socket (16) comprises a charging socket holder (20) which can be electrically coupled to the vehicle battery,
at least one further charging socket (18, 38, 40), wherein the at least one further charging socket comprises a further charging socket holder which can be electrically coupled to the vehicle battery, **characterized in that** the road vehicle (10) further comprises a plug-in socket (24), the plug-in socket (24) being configured to be selectively connected to and be electrically coupled with any one of the charging socket holder (20) and the at least one further charging socket holder (22) and to receive the charging plug (92) of the charging station (90).

2. The road vehicle according to claim 1, further comprising a safety system (26) which detects whether in addition to the connected plug-in socket (24), an additional plug-in socket (24) is connected to any one of the charging socket holder (20) and the at least one further charging socket holder (22).

3. The road vehicle according to claim 1 or 2, wherein the charging socket holder (20) and the at least one further charging socket holder (22) are configured to be electrically decoupled from the vehicle battery (14) when the plug-in socket (24) is detached from the respective socket holder (20, 22).

4. The road vehicle according to any one of the preceding claims, wherein the charging socket holder (20) and the at least one further charging socket holder (22) are finger proof.

5. The road vehicle according to any one of the preceding claims, further comprising at least one socket holder cover (28), wherein the at least one socket holder cover (28) is configured to be connected to any one of the charging socket holder (20) and the at least one further charging socket holder (22).

6. The road vehicle according to claim 5, wherein each of the charging socket holder (20) and the at least one further charging socket holder (22) is provided with a locking mechanism (30) to lock a connected socket holder cover (28) or plug-in socket (24).

7. The road vehicle according to any one of the preceding claims, wherein the safety system (26) comprises a close detection system (32) which detects whether the plug-in socket (24) or a socket holder cover (28) is correctly connected to the respective socket holder (20, 22).

8. The road vehicle according to any one of the preceding claims, wherein the charging socket (16) is placed at a first side (34) of the road vehicle (10), and wherein at least one of the further charging sockets (18, 38, 40) is placed at a second side (36) of the road vehicle (10), opposite the first side (34).

9. The road vehicle according to any one of the preceding claims, wherein the at least one further charging socket (18, 38, 40) comprises a second charging socket (18), a third charging socket (38) and a fourth charging socket (40), wherein the charging socket (16), the second charging socket (18), the third charging socket (38) and the fourth charging socket (40), are placed apart at different positions around a circumference of the road vehicle (10).

10. The road vehicle according to claim 9, wherein the charging socket (16), the second charging socket (18), the third charging socket (38) and the fourth charging socket (40), are placed respectively at or near a left side, at a right side, at a front side, and at a back side of the road vehicle (10).

11. The road vehicle according to any one of the previous claims, wherein the road vehicle (10) is embodied as a truck.

## Patentansprüche

1. Straßenfahrzeug (10) mit einem Elektromotor (12), der so konfiguriert ist, dass er das Fahrzeug (10) zumindest teilweise antreibt, und einer Fahrzeugbatterie (14), die so konfiguriert ist, dass sie den Elektromotor (12) zumindest teilweise mit Energie versorgt,
wobei das Straßenfahrzeug (10) Folgendes umfasst:
- eine Ladebuchse (16), die so konfiguriert ist, dass sie einen Ladestecker (92) einer Ladestation (90) aufnimmt, und mit der Ladestation (90) zusammenwirkt, um die Fahrzeugbatterie (14) zu laden, wobei die Ladebuchse (16) einen Ladebuchsenhalter (20) umfasst, der elektrisch mit der Fahrzeugbatterie gekoppelt werden kann,
mindestens eine weitere Ladebuchse (18, 38, 40), wobei die mindestens eine weitere Ladebuchse einen weiteren Ladebuchsenhalter umfasst, der elektrisch mit der Fahrzeugbatterie gekoppelt werden kann, **dadurch gekennzeichnet, dass** das Straßenfahrzeug (10) ferner einen Stecksockel (24) umfasst, wobei der Stecksockel (24) so konfiguriert ist, dass er wahlweise mit dem Ladebuchsenhalter (20) oder dem mindestens einen weiteren Ladebuchsenhalter (22) verbunden und elektrisch gekoppelt werden kann und den Ladestecker (92) der Ladestation (90) aufnehmen kann.

2. Straßenfahrzeug nach Anspruch 1, das ferner ein Sicherheitssystem (26) umfasst, das erkennt, ob zusätzlich zu dem angeschlossenen Stecksockel (24) ein weiterer Stecksockel (24) mit dem Ladebuchsenhalter (20) oder dem mindestens einen weiteren Ladebuchsenhalter (22) verbunden ist.

3. Straßenfahrzeug nach Anspruch 1 oder 2, wobei der Ladebuchsenhalter (20) und der mindestens eine weitere Ladebuchsenhalter (22) so konfiguriert sind, dass sie von der Fahrzeugbatterie (14) elektrisch entkoppelt werden, wenn der Stecksockel (24) von dem jeweiligen Buchsenhalter (20, 22) gelöst wird.

4. Straßenfahrzeug nach einem der vorhergehenden Ansprüche, wobei der Ladebuchsenhalter (20) und der mindestens eine weitere Ladebuchsenhalter (22) fingersicher sind.

5. Straßenfahrzeug nach einem der vorhergehenden Ansprüche, das ferner mindestens eine Buchsenhalterabdeckung (28) umfasst, wobei die mindestens eine Buchsenhalterabdeckung (28) so konfiguriert ist, dass sie mit dem Ladebuchsenhalter (20) oder dem mindestens einen weiteren Ladebuchsenhalter (22) verbunden werden kann.

6. Straßenfahrzeug nach Anspruch 5, wobei sowohl der Ladebuchsenhalter (20) als auch der mindestens eine weitere Ladebuchsenhalter (22) mit einem Verriegelungsmechanismus (30) zum Verriegeln einer angeschlossenen Buchsenhalterabdeckung (28) oder eines Stecksockels (24) versehen sind.

7. Straßenfahrzeug nach einem der vorhergehenden Ansprüche, wobei das Sicherheitssystem (26) ein Schließerkennungssystem (32) umfasst, das erkennt, ob der Stecksockel (24) oder eine Buchsenhalterabdeckung (28) korrekt mit dem jeweiligen Buchsenhalter (20, 22) verbunden ist.

8. Straßenfahrzeug nach einem der vorhergehenden Ansprüche, wobei die Ladebuchse (16) an einer ersten Seite (34) des Straßenfahrzeugs (10) angeordnet ist, und wobei mindestens eine der weiteren Ladebuchsen (18, 38, 40) an einer zweiten Seite (36) des Straßenfahrzeugs (10), gegenüber der ersten Seite (34), angeordnet ist.

9. Straßenfahrzeug nach einem der vorhergehenden Ansprüche, wobei die mindestens eine weitere Ladebuchse (18, 38, 40) eine zweite Ladebuchse (18), eine dritte Ladebuchse (38) und eine vierte Ladebuchse (40) umfasst, wobei die Ladebuchse (16), die zweite Ladebuchse (18), die dritte Ladebuchse (38) und die vierte Ladebuchse (40) an verschiedenen Positionen um einen Umfang des Straßenfahrzeugs (10) herum angeordnet sind.

10. Straßenfahrzeug nach Anspruch 9, wobei die Ladebuchse (16), die zweite Ladebuchse (18), die dritte Ladebuchse (38) und die vierte Ladebuchse (40) jeweils an oder in der Nähe einer linken Seite, einer rechten Seite, einer Vorderseite und einer Rückseite des Straßenfahrzeugs (10) angeordnet sind.

11. Straßenfahrzeug nach einem der vorhergehenden Ansprüche, wobei das Straßenfahrzeug (10) als Lastkraftwagen ausgebildet ist.

## Revendications

1. Véhicule routier (10) équipé d'un moteur électrique (12) configuré pour propulser au moins partiellement le véhicule (10) et d'une batterie de véhicule (14) configurée pour alimenter au moins partiellement le moteur électrique (12),
dans lequel le véhicule routier (10) comprend :
- une prise de chargement (16) configurée pour recevoir une fiche de chargement (92) d'une borne de chargement (90), et pour coopérer avec la borne de chargement (90) afin de charger la batterie de véhicule (14), dans lequel la prise de chargement (16) comprend une douille de prise de chargement (20) qui peut être couplée électriquement à la batterie de véhicule,
au moins une autre prise de chargement (18, 38, 40), dans lequel l'au moins une autre prise de chargement comprend une autre douille de prise de chargement qui peut être couplée électriquement à la batterie de véhicule, **caractérisé en ce que** le véhicule routier (10) comprend en outre une prise enfichable (24), la prise enfichable (24) étant configurée pour être sélectivement connectée à et être couplée électriquement à n'importe laquelle de la douille de prise de chargement (20) et de l'au moins une autre douille de prise de chargement (22) et pour recevoir la fiche de chargement (92) de la borne de chargement (90).

2. Véhicule routier selon la revendication 1, comprenant en outre un système de sécurité (26) qui détecte si, en plus de la prise enfichable connectée (24), une autre prise enfichable (24) est connectée à n'importe laquelle de la douille de prise de chargement (20) et de l'au moins une autre douille de prise de chargement (22).

3. Véhicule routier selon la revendication 1 ou 2, dans lequel la douille de prise de chargement (20) et l'au moins une autre douille de prise de chargement (22) sont configurées pour être découplées électriquement de la batterie de véhicule (14) lorsque la prise enfichable (24) est détachée de la douille de prise respective (20, 22).

4. Véhicule routier selon l'une quelconque des revendications précédentes, dans lequel la douille de prise de chargement (20) et l'au moins une autre douille de prise de chargement (22) sont protégées contre tout contact avec les doigts.

5. Véhicule routier selon l'une quelconque des revendications précédentes, comprenant en outre au moins un cache de douille de prise (28), dans lequel l'au moins un cache de douille de prise (28) est configuré pour être connecté à n'importe laquelle de la douille de prise de chargement (20) et de l'au moins une autre douille de prise de chargement (22).

6. Véhicule routier selon la revendication 5, dans lequel chacune de la douille de prise de chargement (20) et de l'au moins une autre douille de prise de chargement (22) est équipée d'un mécanisme de verrouillage (30) destiné à verrouiller un cache de douille de prise (28) ou une prise enfichable (24) connecté(e).

7. Véhicule routier selon l'une quelconque des revendications précédentes, dans lequel le système de sécurité (26) comprend un système de détection de fermeture (32) qui détecte si la prise enfichable (24) ou un cache de douille de prise (28) est correctement connecté(e) à la douille de prise respective (20, 22).

8. Véhicule routier selon l'une quelconque des revendications précédentes, dans lequel la prise de chargement (16) est placée au niveau d'un premier côté (34) du véhicule routier (10), et dans lequel au moins l'une des autres prises de chargement (18, 38, 40) est placée au niveau d'un deuxième côté (36) du véhicule routier (10), opposé au premier côté (34).

9. Véhicule routier selon l'une quelconque des revendications précédentes, dans lequel l'au moins une autre prise de chargement (18, 38, 40) comprend une deuxième prise de chargement (18), une troisième prise de chargement (38) et une quatrième prise de chargement (40), dans lequel la prise de chargement (16), la deuxième prise de chargement (18), la troisième prise de chargement (38) et la quatrième prise de chargement (40) sont placées séparément à différents endroits autour d'une circonférence du véhicule routier (10).

10. Véhicule routier selon la revendication 9, dans lequel la prise de chargement (16), la deuxième prise de chargement (18), la troisième prise de chargement (38) et la quatrième prise de chargement (40) sont placées respectivement au niveau ou à proximité d'un côté gauche, au niveau d'un côté droit, au niveau d'un côté avant et au niveau d'un côté arrière du véhicule routier (10).

11. Véhicule routier selon l'une quelconque des revendications précédentes, dans lequel le véhicule routier (10) est sous la forme d'un camion.
